# EUROPEAN PATENT SPECIFICATION

(11) **EP 2 373 712 B1**
(45) Date of publication and mention of the grant of the patent: **26.03.2014**
(21) Application number: 09796159.3
(22) Date of filing: 22.12.2009
(51) Int. Cl.: C08F 283/00, C08F 289/00, C08F 290/00, C08F 291/00, C08L 51/00, C08L 51/08, C09D 151/00, C09D 151/08, C08F 2/22, C08F 2/24, C08F 2/00

(54) **MINI-EMULSIONS AND LATEXES THEREFROM**
MINIEMULSIONEN UND LATICES DARAUS
MINIÉMULSIONS ET LATEX DÉRIVÉS DE CELLES-CI

(30) Priority: 22.12.2008 US 139702 P
(43) Date of publication of application: 12.10.2011
(73) Proprietor: The Sherwin-Williams Company, Cleveland, OH 44115 (US)
(72) Inventor: MARLOW, James, K., Macedonia OH 44056 (US); KAYIMA, Paul, M., Strongsville OH 44136 (US); SAMARANAYAKE, Gamini, S., Broadview Heights OH 44147 (US); RAO, Madhukar, Twinsburg OH 44087 (US)
(74) Representative: Heinemann, Monica
(86) International application number: PCT/US2009/006675
(87) International publication number: WO 2010/074750

(56) References cited:
- GB-A- 870 015
- US-A- 2 892 802
- US-A- 4 983 716
- US-A1- 2007 299 180
- US-B1- 6 333 378
- US-B1- 6 369 135

## Description

This invention is directed to an alkyd/ethylenically unsaturated monomer miniemulsion and a process for making an alkyd/ethylenically unsaturated monomer miniemulsion in which a drier is solubilized in an oil phase. According to this invention, an oil phase comprising ethylenically unsaturated monomer(s), alkyd, and driers is dispersed in an aqueous phase under high shear conditions, forming a highly stable alkyd-monomer miniemulsion. The miniemulsion can then be polymerized under free radical polymerization, producing a highly stable alkyd latex.

Emulsion polymerization is a widely used technique for synthesizing latexes for water-based coatings. Conventional emulsion polymerization requires water, at least one monomer or mixtures thereof, a surfactant or mixture thereof, and a polymerization initiator. In a conventional latex emulsion process, the ethylenically unsaturated monomer or mixture thereof is typically blended and dispersed in water with surfactants under low shear to form a pre-emulsion and then polymerized via free radical polymerization to form a latex composition. Conventional emulsion polymerization starts with a monomer emulsion comprised of relatively large (in the range of 1 to 10 microns) monomer particles. The resulting polymer particles have an average particle size of less than one micron. Polymers commonly produced by emulsion polymerization are styrenebutadiene copolymers, acrylic polymers and copolymers, and polyvinyl acetate for water-based latex paints.

Clark et al., United States Patent, 6,333,378 (2001), describe a process of preparing water-based hybrid-latexes by miniemulsion polymerization of an alkyd and latent oxidatively functional acrylic monomers. A slight variation of this process, which does not restrict the claimed processes to latent oxidatively functional monomers, is disclosed by Schork et al., United States Patent 6,369,135, (2002), which teaches a miniemulsion method of preparing graft copolymers of alkyd resins with various ethylenically unsaturated monomers (methyl methacrylate, styrene). The hybrid latex has been described as forming, on drying, polymeric films of good film properties and used as a replacement for latex paint binders in paint formulations.

Alkyd-latex polymeric binders produce films with good wear properties on oxidative curing that is mediated by metallic driers such as cobalt. Oil soluble metallic driers, such as cobalt octoate, that are post added are customary to alkyd technology.

According to this invention, a mini-emulsion is formed wherein ethylenically unsaturated monomer(s), an alkyd resin, and a metallic drier are first combined to form an oil phase, then blended with an aqueous phase comprising surfactant, and then homogenized together under high shear. After being subjected to high shear, the oil phase solubilizes the drier. While not intending to be bound by any theory, it is believed that the free radical polymerization of the miniemulsion forms hybrid latex polymer particles wherein the drier may become predominantly physically associated with the alkyd in the latex particle and the polymer formed from the ethylenically unsaturated monomers may substantially surround the alkyd, thereby forming highly stable latex particles that are resistant to hydrolysis.

The hybrid alkyd-acrylic latex composition of this invention have gloss and hydrolytic stability comparable to solvent-borne alkyds.

Another aspect of this invention is a process for producing a miniemulsion, such process comprises homogenizing under high shear an aqueous blend of an oil phase comprising one or more alkyd resins, at least one alkyd-drier and at least one ethylenically unsaturated monomer, wherein the drier becomes physically associated with the oil phase.

Another aspect of this invention is a process for polymerizing a miniemulsion, such process comprises the free radical polymerization of a miniemulsion comprising a mixture of alkyd and ethylenically unsaturated monomers, and wherein an alkyd drier is solubilized within the oil phase.

Another aspect of this invention is a latex or polymer emulsion that is the product obtained by a free radical polymerization of a miniemulsion comprising ethylenically unsaturated monomers, alkyd and drier. The latex particles of the miniemulsion polymerization have an average particle diameter in the range from 40 to 700 nanometers. Further still, this invention is a process for making a latex emulsion comprising latex particles comprising alkyd-solubilized driers.

### DETAILED DESCRIPTION OF THE INVENTION

In accordance with this invention, the term "miniemulsion" denotes an emulsion in which an oil phase comprising an alkyd, ethylenically unsaturated monomer(s) and at least one drier, when combined with an aqueous phase under high shear homogenization, forms a miniemulsion wherein the drier is solubilized in the oil phase. According to this invention, prior to homogenization, the aqueous phase comprises at least one surfactant. The miniemulsion particles have an average particle size of from 40 nanometers to 700 nanometers. A free radical initiator initiates the polymerization to form latex particles with alkyd-solubilized driers and with latex polymer formed from ethylenically unsaturaterd monomer(s), producing a hybrid alkyd-acrylic latex.

This invention is a process for the preparation of a latex emulsion, such process comprising:
(a) forming an oil phase comprising an alkyd, a drier, and at least one ethylenically unsaturated monomer, wherein the oil phase solubilizes the drier;
(b) comrbining the oil phase with an aqueous phase to form an alkyd-ethylenically unsaturated monomer-drier emulsion blend (hereinafter, a "pre-emulsion"), wherein the aqueous phase comprises a surfactant and a buffer;
(c) homogenizing the pre-emulsion under high shear, thereby forming a miniemulsion; and
(d) initiating polymerization by adding a free radical initiator, thereby polymerizing the at least one ethylenically unsaturated monomer in the miniemulsion and forming a latex polymer emulsion.

Alkyds useful for this invention include C12-C22 oil based alkyds with iodine value greater than 120; driers useful for this invention include metallic driers and other alkyd driers. The resulting latex polymer particles have average particle sizes in the range of 40 nanometers to 700 nanometers.

The latex emulsions of the present invention have improved hydrolytic stability and provide latex films having gloss and hardness comparable to solventborne alkyd films. While not intending to be bound by any theory, it is believed that due to the physical alkyd-drier affinity, the alkyd shields the drier from premature hydrolysis or deactivation in paint formulations.

### Oil Phase

The ethylenically unsaturated monomer(s) or mixture thereof (i.e., one or more monomers) can be monomers that are essentially insoluble in water and can be polymerized either alone or in monomer mixtures. Examples of suitable ethylenically unsaturated monomers include, styrenic monomers such as styrene, alpha-methyl styrene, vinyl naphthalene, vinyl toluene, chloromethyl styrene; ethylenically unsaturated species such as C1-C12 alkyl (meth)acrylates (for example, methyl acrylate, methyl methacrylate, ethyl acrylate, ethyl methacrylate, butyl acrylate, butyl methacrylate, isobutyl acrylate, isobutyl methacrylate, ethylhexyl acrylate, ethylhexyl methacrylate, octyl acrylate, octyl methacrylate), acrylic acid, methacrylic acid, styrene, glycidyl methacrylate, carbodiimide methacrylate, alkyl crotonates, vinyl acetate, di-n-butyl maleate, di-octylmaleate.

In general, alkyds useful in the oil phase according to this invention include water-insoluble alkyds. Long oils such as oleoresinous alkyds and medium oils, including C12-C22 oil-based alkyds, are typical examples of alkyds useful for this invention. Drying oils may also be used, including coconut oil, fish oil, linseed oil, tung oil, castor oil, cottonseed oil, safflower oil, sunflower oil, soybean oil, and tall oil.

The function of the drier is to promote the oxidative polymerization of the unsaturated oils which are present in the coating composition to thereby form a solid film. Oxidation polymerization (i.e. drying) takes place after paint film application. Suitable driers for use in this invention include without limitation, metal-containing compounds; for example, cobalt, zirconium, manganese, calcium, zinc, copper, barium, vanadium, cerium, iron, potassium, strontium, aluminum, bismuth and lithium-containing compounds. Drier promoters can also be used for accelerating the curing or hardening of the film. Examples of non-metallic drier promoters include 8-hydroxyquinoline, quinoline, salicyl aldoxime, pyridine-2-carbaldoxime, acetylacetonate enamines, 2-2'-bipyridyl, ethylenediamine, propylenediamine, pyridine, o-vinylpyridine, o-aminopyridine, aniline, o-phenylenediamine, o-toluidine, alpha-naphthylamine, o-phenanthroline, dipropylamine, diamylamine, acrylonitrile, succinonitrile, o-tolunitrile, o-toluamide, pyrrole, benzimidazole, benzotriazole, benzophenone, benzophenone methacrylate. Driers and drier promoters can be present in the range of 0.05 weight percent to 0.50 weight percent, based on the total weight of the alkyd.

### Aqueous Phase

The aqueous phase is generally a water/surfactant/buffer mixture. The surfactant can be conventional surfactants used in emulsion polymerization. Either a single surfactant or a mixture of surfactants may be used. Representative surfactants include: sodium lauryl sulfate and other alkyl sulfates; sodium dodecyl benzene sulfonate and other alkyl and aryl sulfonates; sodium stearate and other fatty acid salts, alkylpolyethers and alkylpolyether sulfates; and polyvinyl alcohol and other non-ionic or polymeric surfactants. When a mixture of surfactants is used, the mixture may include an anionic or a cationic surfactant, plus a non-ionic surfactant, or two or more anionic or cationic surfactants, or two or more non-ionic surfactants. The amount of surfactant may be from 0.5 to 5.0 percent by weight, based on monomer plus alkyd resin. The preferred amount is from 0.5 to 2 percent by weight, based on monomer plus alkyd resin.

Additionally, polymeric or non-polymeric co-surfactants may be advantageously used in the aqueous phase. Polymeric co-surfactants that may be used include polymers that are both highly water insoluble and highly soluble in the monomer of choice. The polymeric co-surfactant may be a polymer (e.g., homopolymer, copolymer, or block or graft copolymer) or a mixture or blend thereof having a molecular weight in the range of 3,000 to 1,100,000, preferably from 9,000 to 750,000. Polymeric co-surfactants having a molecular weight in the range of 350,000 to 750,000 can also be used. Representative polymeric co-surfactants useable in the present invention include polymethyl methacrylate (PMMA), polystyrene, polyvinyl acetate, polymethylacrylate and polyethylacrylate. Certain copolymers such as styrene-isoprene copolymer, and certain block polymers such as poly (styrene-block-butadiene) and poly (styrene-block-isoprene) can also be useful. Other polymeric co-surfactants may be used as long as they meet the above criteria of being essentially insoluble in water but soluble in the monomer or monomer mixture, and are innocuous in the final product. The amount of polymeric co-surfactant can be from 0.5 to 5.0 percent by weight, based on the total weight of the monomer(s) and alkyd resin. In one embodiment, the polymeric co-surfactant is present at an amount of from 0.5 to 2 percent by weight, based on the total weight of the monomer(s) and alkyd resin.

Nonpolymeric co-surfactants may be used in place of polymeric co-surfactants, or in combination with them. Representative non-polymeric co-surfactants include hexadecane, cetyl alcohol, and highly water-insoluble monomers such as 2-ethyl hexyl methacrylate, iso-octylacrylate and isodecyl acrylate, and chain transfer agents such as dodecyl mercaptan. The amount of non-polymeric co-surfactant may be from 0.5 to 5.0 percent by weight, based on the total weight of the monomer(s) and alkyd resin. The amount of non-polymeric co-surfactant can be from 0.5 to 5.0 percent by weight, based on the total weight of the monomer(s) and alkyd resin. In one embodiment, the non-polymeric co-surfactant is present at an amount of from 0.5 to 2 percent by weight, based on the total weight of the monomer(s) and alkyd resin.

### Preparation of Miniemulsion

The relative ratio amount of the alkyd to the ethylenically unsaturated monomer(s) in the oil phase is 40: 60 to 60:40. A drier is present at 0.02% by weight to 0.5 % by weight, based on the total monomer and alkyd weight. The aqueous phase is blended with the oil phase to form a pre-emulsion. The pre-emulsion is then subjected to high shear homogenization utilizing, for example a microfluidizer, sonicator, homogenizer, colloid mill or other device, until the alkyd and monomer particle sizes are in the range of 40 nanometers to 700 nanometers. During the process of high shear homogenization, the drier becomes solubilized in the oil phase.

### Preparation of Latex Emulsion

The latex polymers of this invention are prepared by free radical polymerization of the miniemulsion blend. While the temperature in this step is not critical (in general, any temperature between the freezing point and the boiling point of the reaction components can be used), temperatures for conventional free radical emulsion polymerization range from 20° C to 90°C. Polymerization temperature can also depend on the choice of the free radical initiator. The particles of the miniemulsion have average particle size in the range of 40 nm to 700 nm. The monomer content of the miniemulsion is polymerized under free radical polymerization conditions in the presence of a free radical initiator. Both the initiator and the conditions may be conventional. Suitable free radical initiators are known in the art. These include, for example, the organic peroxides such as benzoyl peroxide, lauroyl peroxide and dicumyl peroxide; hydroperoxides such as tertiary butyl hydroperoxide, toluyl hydroperoxide, cumene hydroperoxide, amyl hydroperoxide; and inorganic persulfates such as potassium persulfate or ammonium persulfate; azobis-(isobutyro nitrile) (AIBN). The type of initiator is not critical to this invention. The polymerization initiator may be either a water-soluble or an oil soluble compound.

The latex polymer average particle size is in the range from 10 to 1,000 nanometers. In one embodiment, the latex polymer average particle size in the latex emulsion is in the range of 40 nm to 700 nanometers. In another embodiment, the latex polymer average particle size range is from 80 to 400 nanometers.

### Resin Compositions

Polymer latexes produced according to the present invention can be used to formulate water-borne coatings. The coatings will have environmental (low in volatile organic compounds) and convenience (water cleanup) advantages of latex coatings, as well as the crosslinking, hydrolytic stability and gloss-development benefits from the alkyd. This invention will now be described in further detail with reference to the examples that follow.

### Latex Example 1

A miniemulsion can be prepared from the formulation shown in Table 1, using the following procedure. Glycidyl methacrylate, dimethyl benzylamine (catalyst) and methylhydroquinone are blended together with alkyd and heated to 120 C, and held for 2 hours. The monomers and driers can be blended together and added with the alkyd. Water, surfactant(s) and buffers are premixed and then added to the monomer/alkyd/drier mix to form the pre-emulsion. The pre-emulsion is subjected to high shear using a microfluidizer (Model # M-110Y, Microfluidics Corp, Mass, USA) at 1200- 1300 psi, two cycles each lasting for about 12-15 min or repeating until particle size is less than 400 nm to form a miniemulsion. The miniemulsion is poured into the reactor and then the initiator is fed over 4 hours and then held for 30 minutes. The chase comprising of two separate feeds of t-butylhydroperoxide and ascorbic acid is fed over 2 hours and held for 1 hour. The reaction mix is cooled and the pH is adjusterd to 8.5, and the percent NVM is measured. Particle sizes are measured by a laser light scattering instrument (Malvern, MA, USA). The average particle size ranges from between 40 nm to 700 nm.

**TABLE 1**

| **Raw Material** | **Weight Percent** |
|---|---|
| Polystep B-23 | 1.50 |
| Rhodasurf LA-12 | 0.26 |
| SPS | 0.48 |
| Polyethylene Terephthalate Alkyd | 62.27 |
| Butyl acrylate | 16.29 |
| Methyl methacrylate | 16.29 |
| Glycidyl methacrylate | 0.54 |
| Methacrylic acid | 0.38 |
| Stryrene | 4.23 |
| Dimethylbenzyl amine | 0.01 |
| 12% cobalt octoate | 0.08 |
| DryRX | 0.02 |
| MEHQ | 22ppm |
| t-Butylhydroperoxide | 0.09 |
| Ascorbic acid | 0.19 |
| PS nm | 255 |
| NVM% | 52.6 |

| | |
|---|---|
| SPS = sodium persulfate; Surfactants: Polystep, Rhodasurf; MEHQ=methylhydroquinone; PS=particle size, NVM=non-volatile mass | |

### Paint Examples

Comparative results of latex paint samples utilizing the miniemulsion of this invention (Example 1 above) vs. latex samples from conventional emulsion polymerization are provided in Table II. Coated substrates are made using the latex products of the miniemulsions. Draw downs of 4 mil wet film thickness are prepared and dried at room temperature. The results are given in Table II.

**TABLE II**

| **Sample** | **Drying** | | | **Gloss** | **Stability** |
|---|---|---|---|---|---|
| | **DT** | **TF** | **DH** | | |
| **SWP Alkyd control** | 2.75 hr | 6 hr | 9 hr | 79 | 7 |
| **Control latex** | 20 min | 30 min | 1 hr | 70 | 8 |
| **Example 1** | 45 min | 1 hr | 5 hr | 80 | 10 |

| | | | | | |
|---|---|---|---|---|---|
| DT=dry to touch; TF= Tack-Free; DH=Dry hard; SWP = Sherwin-Williams solvent-borne alkyd. | | | | | |

## Claims

1. A process for the preparation of a latex composition comprising:
a. forming an oil phase comprising an alkyd, a drier, and at least one ethylenically unsaturated monomer, wherein the oil phase solubilizes the drier;
b. combining the oil phase with an aqueous phase, wherein the aqueous phase comprises a surfactant, to form a pre-emulsion;
c. homogenizing the pre-emulsion thereby forming a miniemulsion, wherein the drier is solubilized in the oil phase;
d. initiating the polymerization by adding a free radical initiator, thereby polymerizing the at least one ethylenically unsaturated monomer in the miniemulsion and forming a latex polymer emulsion having latex polymer particle sizes in the range of 40 nm to 700 nm.

2. The process of claim 1, wherein the drier is a metallic drier.

3. The process of claim 1, wherein the drier is selected from the group consisting of cobalt, zirconium, manganese, calcium, zinc, copper, barium, vanadium, cerium, iron, potassium, strontium, aluminum, bismuth and lithium compounds.

4. The process of claim 1, wherein the alkyd is a C12-C22 oil-based alkyd having an iodine value greater than 120.

5. The process of claim 1, wherein the alkyd is selected from the group consisting of vegetable oil, C12-C22 oil-based alkyds, coconut oil, fish oil, linseed oil, tung oil, castor oil, cottonseed oil, safflower oil, sunflower oil, soybean oil, and tall oil.

6. The process of claim 1, wherein the drier is present in the oil phase in the range of 0.05 weight percent to 0.50 weight percent, based on the total weight of the alkyd.

7. The process of claim 1, wherein the alkyd has an iodine level greater than 120.

8. The process of claim 1, wherein the ratio of the alkyd to the total monomer present in the oil phase is 40: 60 to 60:40.

9. The process of claim 1 wherein the surfactant is a surfactant selected from the group consisting of cationic, anionic, nonionic or polymeric surfactant, or a mixture thereof or wherein the amount of surfactant is from 0.5 to 5.0 percent by weight based on the total weight of the monomer and alkyd.

10. The process of claim 1 wherein the ethylenically unsaturated monomer is selected from the group consisting of vinyl monomers, acrylic monomers, allylic monomers, acrylamides, acrylonitriles N-vinyl amides, N-allyl amines mono- and dicarboxylic unsaturated acids and vinyl ethers. Vinyl esters may be used and may include vinyl acetate, vinyl propionate, vinyl butyrates, vinyl neodecanoate and similar vinyl esters; vinyl halides include vinyl chloride, vinyl fluoride and vinylidene chloride; vinyl aromatic hydrocarbons include styrene, a-methyl styrene, and similar lower alkyl styrenes. Acrylic monomers include monomers such as alkyl esters of acrylic or methacrylic acid having an alkyl portion containing between 1 to 12 carbon atoms as well as aromatic derivatives of acrylic and methacrylic acid. Useful acrylic monomers may include, for example, acrylic and methacrylic acid esters of aliphatic alcohol having C₁ to C₁₂: methyl acrylate, and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl and dodecyl acrylate and methacrylate, isodecylacrylate and methacrylate, and benzyl acrylate and methacrylate; poly(propylene glycol) acrylates and methacrylates, poly(ethylene glycol) acrylates and methacrylates and their ethers of alcohols containing from I to 18 carbon atoms.

11. A product of the process of claim 1.

12. The product of claim 11, wherein the volatile organic content is less than 50 grams/liter.

13. A process for the preparation of a mini-emulsion comprising:
a. forming an oil phase comprising an alkyd, a drier, and at least one ethylenically unsaturated monomer, wherein the oil phase solubilizes the drier;
b. combining the oil phase with an aqueous phase, wherein the aqueous phase comprises a surfactant to form a pre-emulsion;
c. homogenizing the pre-emulsion at high shear thereby forming a miniemulsion, wherein the drier is solubilized in the oil phase; and wherein the average particle size of the monomer particles and the alkyd is in the range of 40 nanometers to 700 nanometers.

14. A latex pre-emulsion, said pre-emulsion prepared via a process comprising:
a. forming an oil phase comprising an alkyd, a drier, and at least one ethylenically unsaturated monomer, wherein the drier is dissolved in the oil phase;
b. an aqueous phase, wherein the aqueous phase comprises a surfactant; and wherein the oil phase and aqueous phase are blended at high shear to form average particle sizes in the range or 40 nm to 700 nm.

15. A latex polymer particle, comprising;
a drier associated with an alkyd in the latex polymer particle, said latex polymer particle formed from a free radical polymerization of a latex pre-emulsion comprising:
a. an oil phase comprising an alkyd, a drier, and at least one ethylenically unsaturated monomer, wherein the drier is dissolved in the oil phase;
b. an aqueous phase, wherein the aqueous phase comprises a surfactant; and
c. wherein the oil phase and aqueous phase are blended at high shear to form average particle sizes in the range of 40 nm to 700 nm.

## Patentansprüche

1. Ein Verfahren zur Herstellung einer Latexzusammensetzung, umfassend:
a. Erzeugen einer Ölphase, die ein Alkyd, ein Trockenmittel und wenigstens ein ethylenisch ungesättigtes Monomer umfasst, wobei die Ölphase das Trockenmittel löst,
b. Vereinen der Ölphase mit einer wässrigen Phase, wobei die wässrige Phase ein Tensid umfasst, um eine Voremulsion zu bilden,
c. Homogenisieren der Voremulsion, wodurch eine Miniemulsion gebildet wird, wobei das Trockenmittel in der Ölphase gelöst ist,
d. Einleiten der Polymerisation durch Zugabe eines Radikalstarters, wodurch das wenigstens eine ethylenisch ungesättigte Monomer in der Miniemulsion polymerisiert und sich eine Latexpolymeremulsion mit Latexpolymerpartikelgrößen im Bereich von 40 nm bis 700 nm bildet.

2. Das Verfahren nach Anspruch 1, wobei das Trockenmittel ein metallisches Trockenmittel ist.

3. Das Verfahren nach Anspruch 1, wobei das Trockenmittel ausgewählt ist aus der Gruppe, bestehend aus Kobalt-, Zirkon-, Mangan-, Kalzium-, Zink-, Kupfer-, Barium-, Vanadium-, Cer-, Eisen-, Kalium-, Strontium-, Aluminium-, Wismut- und Lithiumverbindungen.

4. Das Verfahren nach Anspruch 1, wobei das Alkyd ein C12-C22-Alkyd auf Ölbasis mit einer Iodzahl von größer als 120 ist.

5. Das Verfahren nach Anspruch 1, wobei das Alkyd ausgewählt ist aus der Gruppe, bestehend aus Pflanzenöl, C12-C22-Alkyden auf Ölbasis, Kokosnussöl, Fischöl, Leinsamenöl, Tungöl, Kastoröl, Baumwollsamenöl, Distelöl, Sonnenblumenöl, Sojabohnenöl und Tallöl.

6. Das Verfahren nach Anspruch 1, wobei das Trockenmittel in der Ölphase im Bereich von 0,05 Gew.-% bis 0,50 Gew.-% vorliegt, bezogen auf das Gesamtgewicht des Alkyds.

7. Das Verfahren nach Anspruch 1, wobei das Alkyd eine Iodzahl von größer als 120 besitzt.

8. Das Verfahren nach Anspruch 1, wobei das Verhältnis des Alkyds zum Gesamt-Monomer, das in der Ölphase vorliegt, 40:60 bis 60:40 beträgt.

9. Das Verfahren nach Anspruch 1, wobei das Tensid ein Tensid ist, ausgewählt aus der Gruppe, bestehend aus kationischem, anionischem, nichtionischem oder polymerem Tensid oder einer Mischung davon oder wobei die Menge an Tensid 0,5 bis 5,0 Gew.-% beträgt, bezogen auf das Gesamtgewicht aus Monomer und Alkyd.

10. Das Verfahren nach Anspruch 1, wobei das ethylenisch ungesättigte Monomer ausgewählt ist aus der Gruppe, bestehend aus Vinylmonomeren, Acrylmonomeren, Allylmonomeren, Acrylamiden, Acrylonitrilen, N-Vinylamiden, N-Allylaminen, ungesättigten Mono- und Dicarbonsäuren und Vinylethern. Vinylester können verwendet werden und können u.a. Vinylacetat, Vinylpropionat, Vinylbutyrate, Vinylneodecanoat und ähnliche Vinylester umfassen; Vinylhalogenide sind u.a. Vinylchlorid, Vinylfluorid und Vinylidenchlorid; vinylaromatische Kohlenwasserstoffe sind u.a. Styrol, α - Methylstyrol und ähnliche Niedrigalkylstyrole. Acrylmonomere sind u.a. Monomere wie beispielsweise Alkylester von Acryl- oder Methacrylsäure mit einem Alkylteil, der zwischen 1 bis 12 Kohlenstoffatome enthält, sowie aromatische Derivate von Acryl- und Methacrylsäure. Geeignete Acrylmonomere können u.a. zum Beispiel Acryl- und Methacrylsäureester von aliphatischem Alkohol mit C₁ bis C₁₂ sein; Methylacrylat und Methacrylat, Ethylacrylat und Methacrylat, Butylacrylat und Methacrylat, Propylacrylat und Methacrylat, 2-Ethylhexylacrylat und Methacrylat, Cyclohexylacrylat und Methacrylat, Decyl- und Dodecylacrylat und Methacrylat, Isodecylacrylat und Methacrylat, und Benzylacrylat und Methacrylat; Poly(propylenglycol)acrylate und Methacrylate, Poly(ethylenglycol)acrylate und Methacrylate und deren Ether von Alkoholen, die 1 bis 18 Kohlenstoffatome enthalten.

11. Ein Produkt des Verfahrens nach Anspruch 1.

12. Das Produkt nach Anspruch 11, wobei der Gehalt an flüchtigen organischen Stoffen weniger als 50 Gramm/Liter beträgt.

13. Ein Verfahren zur Herstellung einer Miniemulsion, umfassend:
a. Erzeugen einer Ölphase, die ein Alkyd, ein Trockenmittel und wenigstens ein ethylenisch ungesättigtes Monomer umfasst, wobei die Ölphase das Trockenmittel löst,
b. Vereinen der Ölphase mit einer wässrigen Phase, wobei die wässrige Phase ein Tensid umfasst, um eine Voremulsion zu bilden,
c. Homogenisieren der Voremulsion mit hoher Scherkraft, wodurch eine Miniemulsion gebildet wird, wobei das Trockenmittel in der Ölphase gelöst ist, und wobei die mittlere Partikelgröße der Monomerpartikel und des Alkyds im Bereich von 40 Nanometer bis 700 Nanometer liegt.

14. Eine Latex-Voremulsion, wobei die Voremulsion durch ein Verfahren erzeugt wird, das umfasst:
a. Erzeugen einer Ölphase, die ein Alkyd, ein Trockenmittel und wenigstens ein ethylenisch ungesättigtes Monomer umfasst, wobei das Trockenmittel in der Ölphase gelöst ist,
b. eine wässrige Phase, wobei die wässrige Phase ein Tensid umfasst, und wobei die Ölphase und die wässrige Phase mit hoher Scherkraft vermischt werden, um mittlere Partikelgrößen im Bereich von 40 nm bis 700 nm zu bilden.

15. Ein Latexpolymerpartikel, umfassend:
ein Trockenmittel in Verbindung mit einem Alkyd in dem Latexpolymerpartikel, wobei das Latexpolymerpartikel durch eine radikalische Polymerisation einer Latex-Voremulsion gebildet wird, umfassend:
a. eine Ölphase, die ein Alkyd, ein Trockenmittel und wenigstens ein ethylenisch ungesättigtes Monomer umfasst, wobei das Trockenmittel in der Ölphase gelöst ist,
b. eine wässrige Phase, wobei die wässrige Phase ein Tensid umfasst, und
c. wobei die Ölphase und die wässrige Phase mit hoher Scherkraft vermischt werden, um mittlere Partikelgrößen im Bereich von 40 nm bis 700 nm zu bilden.

## Revendications

1. Procédé de préparation d'une composition de latex, qui comprend :
a. la formation d'une phase huileuse comprenant un alkyde, un desséchant et au moins un monomère à insaturation éthylénique, où la phase huileuse solubilise le desséchant ;
b. la combinaison de la phase huileuse à une phase aqueuse, où la phase aqueuse comprend un surfactant, pour former une pré-émulsion ;
c. l'homogénéisation de la pré-émulsion, formant ainsi une miniémulsion, où le desséchant est solubilisé dans la phase huileuse ;
d. l'initiation de la polymérisation par l'addition d'un initiateur de radicaux libres, polymérisant ainsi le au moins un monomère à insaturation éthylénique dans la miniémulsion et formant une émulsion d'un polymère de latex dans laquelle la taille des particules de polymère de latex est dans la plage qui va de 40 nm à 700 nm.

2. Procédé de la revendication 1, dans lequel le desséchant est un desséchant métallique.

3. Procédé de la revendication 1, dans lequel le desséchant est sélectionné dans le groupe consistant en des composés du cobalt, du zirconium, du manganèse, du calcium, du zinc, du cuivre, du baryum, du vanadium, du cérium, du fer, du potassium, du strontium, de l'aluminium, du bismuth et du lithium.

4. Procédé de la revendication 1, dans lequel l'alkyde est un alkyde en C12-C22 à base d'huile dont l'indice d'iode est supérieur à 120.

5. Procédé de la revendication 1, dans lequel l'alkyde est sélectionné dans le groupe consistant en une huile végétale, des alkydes en C12-C22 à base d'huile, l'huile de coco, une huile de poisson, l'huile de lin, l'huile d'abrasin, l'huile de ricin, l'huile de coton, l'huile de carthame, l'huile de tournesol, l'huile de soja et le tallol.

6. Procédé de la revendication 1, dans lequel le desséchant est présent dans la phase huileuse dans la plage allant de 0,05 pour cent en poids à 0,50 pour cent en poids, sur la base du poids total de l'alkyde.

7. Procédé de la revendication 1, dans lequel l'alkyde a un indice d'iode supérieur à 120.

8. Procédé de la revendication 1, dans lequel le rapport entre l'alkyde et le monomère total présent dans la phase huileuse va de 40: 60 à 60:40.

9. Procédé de la revendication 1, dans lequel le surfactant est un surfactant sélectionné dans le groupe consistant en un surfactant cationique, anionique, non ionique ou polymère, ou un mélange de ceux-ci ou dans lequel la quantité de surfactant va de 0,5 à 5,0 pour cent en poids, sur la base du poids total du monomère et de l'alkyde.

10. Procédé de la revendication 1, dans lequel le monomère à insaturation éthylénique est sélectionné dans le groupe consistant en des monomères vinyliques, monomères acryliques, monomères allyliques, acrylamides, acrylonitriles, amides N-vinyliques, amines N-allyliques, acides mono- et dicarboxyliques insaturés et éthers vinyliques. Il est possible d'utiliser des esters de vinyle, dont l'acétate de vinyle, le propionate de vinyle, les butyrates de vinyle, le néodécanoate de vinyle et des esters de vinyle similaires ; les halogénures de vinyle incluent le chlorure de vinyle, le fluorure de vinyle et le chlorure de vinylidène ; les hydrocarbures de vinyle aromatiques incluent le styrène, l'α-méthylstyrène et des (alkyle inférieur)styrènes similaires. Les monomères acryliques incluent des monomères tels que des esters alkyliques d'un acide acrylique ou méthacrylique ayant une portion alkylique qui contient entre 1 et 12 atomes de carbone, ainsi que des dérivés aromatiques d'un acide acrylique ou méthacrylique. Les monomères acryliques utiles peuvent par exemple inclure des esters d'acide acrylique et méthacrylique d'un alcool aliphatique ayant de C1 à C12 : acrylate et méthacrylate de méthyle, acrylate et méthacrylate d'éthyle, acrylate et méthacrylate de butyle, acrylate et méthacrylate de propyle, acrylate et méthacrylate de 2-éthylhexyle, acrylate et méthacrylate de cyclohexyle, acrylate et méthacrylate de décyle et de dodécyle, acrylate et méthacrylate d'isodécyle et acrylate et méthacrylate de benzoyle ; acrylates et méthacrylates de poly(propylèneglycol) et leurs éthers d'alcools contenant de 1 à 18 atomes de carbone.

11. Produit du procédé de la revendication 1.

12. Produit de la revendication 11, dans lequel le contenu en substances organiques volatiles est inférieur à 50 grammes/litre.

13. Procédé de préparation d'une miniémulsion, qui comprend :
a. la formation d'une phase huileuse comprenant un alkyde, un desséchant et au moins un monomère à insaturation éthylénique, où la phase huileuse solubilise le desséchant ;
b. la combinaison de la phase huileuse à une phase aqueuse, où la phase aqueuse comprend un surfactant, pour former une pré-émulsion ;
c. l'homogénéisation de la pré-émulsion sous cisaillement élevé pour former une miniémulsion, le desséchant étant solubilisé dans la phase huileuse ; et la taille moyenne des particules du monomère et de l'alkyde étant dans la plage qui va de 40 nanomètres à 700 nanomètres.

14. Pré-émulsion de latex, ladite pré-émulsion étant préparée par un procédé qui comprend :
a. la formation d'une phase huileuse comprenant un alkyde, un desséchant et au moins un monomère à insaturation éthylénique, où le desséchant est dissous dans la phase huileuse ;
b. une phase aqueuse, la phase aqueuse comprenant un surfactant; et la phase huileuse et la phase aqueuse étant mélangées sous cisaillement élevé pour former des particules dont la taille moyenne est dans la plage qui va de 40 nm à 700 nm.

15. Particule de polymère de latex, qui comprend :
un desséchant associé à un alkyde dans la particule de polymère de latex, ladite particule de polymère de latex étant formée par polymérisation radicalaire d'une pré-émulsion de latex comprenant :
a. une phase huileuse comprenant un alkyde, un desséchant et au moins un monomère à insaturation éthylénique, où le desséchant est dissous dans la phase huileuse ;
b. une phase aqueuse, la phase aqueuse comprenant un surfactant ; et
c. la phase huileuse et la phase aqueuse étant mélangées sous cisaillement élevé pour former des particules dont la taille moyenne est dans la plage qui va de 40 nm à 700 nm.
